# EUROPEAN PATENT APPLICATION

(11) **EP 4 472 003 A1**
(43) Date of publication of application: **04.12.2024**
(21) Application number: 23825366.0
(22) Date of filing: 25.09.2023
(51) Int. Cl.: H02H 7/18, H02J 7/35, H02S 40/38, H02J 7/00

(54) **PHOTOVOLTAIC WEAK-CURRENT ELIMINATION CIRCUIT AND ENERGY STORAGE POWER SOURCE**

(30) Priority: 20.04.2023 CN 202310423766
(71) Applicant: SHENZHEN POWEROAK NEWENER CO., LTD, Shenzhen, Guangdong 518000 (CN)
(72) Inventor: The designation of the inventor has not yet been filed
(74) Representative: Ipside
(86) International application number: PCT/CN2023/121206
(87) International publication number: WO 2024/216849

(57) **Abstract**

The present application relates to the technical field of power supply protection, and mainly provides a photovoltaic weak current eliminating circuit and an energy storage power supply which include a discharge triggering module, a locking module, a discharge unlocking module and a discharge module. The discharge triggering module is connected with the discharge module, the discharge unlocking module and the locking module, and all of the discharge module, the discharge triggering module and the discharge unlocking module are used for connecting with a photovoltaic input source. The discharge triggering module is configured to output a first control signal when an output voltage of the photovoltaic input source is greater than a preset voltage, so as to control the discharge module to discharge the energy of the photovoltaic input source. The locking module keeps the discharge triggering module outputting the first control signal after the discharge module operates. As such, the stability of the energy storage power supply can be improved. After the discharge module operates, the discharge unlocking module controls the discharge triggering module to output a second control signal if the output voltage of the photovoltaic input source is greater than the preset voltage, so as to stop the operation of the discharge module. As such, the utilization ratio of the photovoltaic input source can be improved.

## Description

### Cross-Reference To Related Application

The present application claims priority to Chinese Patent Application No. 202310423766.X, filed with the Chinese Patent Office on April 20, 2023 and entitled "A PHOTOVOLTAIC WEAK CURRENT ELIMINATING CIRCUIT AND ENERGY STORAGE POWER SUPPLY", the entirety of which is incorporated herein by reference.

### Technical Field

The present application relates to the technical field of power supply protection, and in particular, relates to a photovoltaic weak current eliminating circuit and an energy storage power supply.

### Background of the invention

Solar panels convert solar energy into electric energy by absorbing sunlight, and when the solar energy of the solar panels is converted into electric energy, the converted electric energy needs to be stored in an energy storage power supply or a power supply apparatus. During operation of the solar panels, the voltage output of the solar panels is unstable if the sunlight is blocked by shade of trees or dark clouds or if the solar panels operate at night. For example, in the nighttime with bright moonlight, the solar panels output weak voltage which can activate the energy storage power supply, but the power that is actually output is not enough to support the power consumption inside the system, which leads to the immediate shutdown of the system. As a consequence, the energy storage power supply keeps being powered on and powered off continuously, which makes the system unstable in operation and greatly reduces the service life of the energy storage power supply.

### Summary of the invention

Embodiments of the present application mainly solve the technical problem that the energy storage power supply is unstable in operation and has a greatly reduced service life due to the weak voltage output by the solar panels.

In order to solve the above technical problem, a technical solution adopted by the embodiment of the present application is to provide a photovoltaic weak current eliminating circuit, the photovoltaic weak current eliminating circuit includes a discharge triggering module, a locking module, a discharge unlocking module and a discharge module;
the discharge triggering module is connected with the discharge module, the locking module and the discharge unlocking module respectively, and all of the discharge module, the discharge triggering module and the discharge unlocking module are used for connecting with a photovoltaic input source;
the discharge triggering module is configured to output a first control signal to the discharge module when an output voltage of the photovoltaic input source is greater than a preset voltage, so as to control the discharge module to operate and discharge the energy of the photovoltaic input source;
the locking module is configured to keep the discharge triggering module outputting the first control signal after the discharge module operates, so as to maintain the operation of the discharge circuit;
the discharge unlocking module is configured to determine whether the output voltage of the photovoltaic input source is greater than the preset voltage after the discharge module operates, and control the discharge triggering module to output a second control signal when the output voltage of the photovoltaic input source is greater than the preset voltage, so as to stop the operation of the discharge module.

Optionally, the discharge triggering module includes a voltage-dividing driving unit and a triggering unit;
the voltage-dividing driving unit is respectively connected with the photovoltaic input source, the discharge unlocking module, the locking module and the triggering unit, and the triggering unit is respectively connected with the locking module and the discharge module;
the voltage-dividing driving unit is configured to divide the output voltage and input the divided output voltage to the triggering unit;
the triggering unit is configured to determine whether the divided output voltage reaches a trigger threshold so as to determine whether the output voltage is greater than the preset voltage, and output the first control signal to the discharge module when the divided output voltage reaches the trigger threshold.

Optionally, the voltage-dividing unit includes a resistor R2, a resistor R8 and a capacitor C2;
a first end of the resistor R2 is connected with the photovoltaic input source, a second end of the resistor R2 is respectively connected with the discharge unlocking module, a control end of the triggering unit and a first end of the resistor R8, a second end of the resistor R8 is used for grounding, and the capacitor C2 is connected in parallel with the resistor R8.

Optionally, the triggering unit includes a switch tube Q2, a switch tube Q4, a resistor R4, a resistor R6 and a resistor R9;
a control end of the switch tube Q4 is connected with the second end of the resistor R2, a first end of the switch tube Q4 is connected with a control end of the switch tube Q2 through the resistor R6, a second end of the switch tube Q4 is used for grounding, the control end of the switch tube Q2 is further connected with the locking module through the resistor R6, a first end of the switch tube Q2 is connected with the photovoltaic input source through the resistor R4, and a second end of the switch tube Q2 is grounded through the resistor R9.

Optionally, the discharge module includes a resistor R5 and a switch tube Q5;
a control end of the switch tube Q5 is connected with the discharge triggering module, a first end of the switch tube Q5 is connected with the photovoltaic input source through the resistor R5, and a second end of the switch tube Q5 is used for grounding.

Optionally, the locking module is configured to adjust the proportion of the divided output voltage after the discharge module operates, so as to keep the discharge triggering module outputting the first control signal.

Optionally, the locking module includes a switch tube Q1 and a resistor R3;
a control end of the switch tube Q1 is connected with the triggering unit, a first end of the switch tube Q1 is connected with a first end of the voltage-dividing driving unit through the resistor R3, and a second end of the switch tube Q1 is connected with a second end of the voltage-dividing driving unit.

Optionally, the discharge unlocking module is configured to determine whether the output voltage is greater than the preset voltage and whether the time during which the output voltage is greater than the preset voltage exceeds a preset time after the discharge module operates, and control the discharge triggering module to output the second control signal when the time during which the output voltage is greater than the preset voltage exceeds the preset time.

Optionally, the discharge unlocking module includes a diode ZD1, a diode ZD2, a capacitor C1, a switch tube Q3, a resistor R1 and a resistor R7;
a cathode of the diode ZD1 is connected with the photovoltaic input source through the resistor R1, an anode of the diode ZD1 is respectively connected with a first end of the capacitor C1 and a cathode of the diode ZD2, an anode of the diode ZD2 is connected with a control end of the switch tube Q3, a first end of the switch tube Q3 is connected with a control end of the discharge triggering module, a second end of the switch tube Q3 is used for grounding, a second end of the capacitor C1 is grounded, and the resistor R7 is connected in parallel with the capacitor C1.

In order to solve the above technical problem, another technical solution adopted by the embodiment of the present application is to provide an energy storage power supply which includes:
a BMS module;
a battery, and
the photovoltaic weak current eliminating circuit described above, the BMS module being connected with the discharge module and the battery respectively.

Different from the related art, the embodiments of the present application provide a photovoltaic weak current eliminating circuit and an energy storage power supply, the photovoltaic weak current eliminating circuit includes a discharge triggering module, a locking module, a discharge unlocking module and a discharge module. The discharge triggering module is connected with the discharge module, the locking module and the discharge unlocking module respectively, and all of the discharge module, the discharge triggering module and the discharge unlocking module are used for connecting with a photovoltaic input source. The discharge triggering module is configured to output a first control signal to the discharge module when an output voltage of the photovoltaic input source is greater than a preset voltage, so as to control the discharge module to operate and discharge the energy of the photovoltaic input source. After the discharge module operates, the locking module keeps the discharge triggering module outputting the first control signal, so as to maintain the operation of the discharge circuit. The discharge unlocking module controls the discharge triggering module to output a second control signal if the output voltage of the photovoltaic input source is still greater than the preset voltage after the discharge module operates, so as to stop the operation of the discharge module. Based on the above description, when the photovoltaic input source is connected, and the output voltage of the photovoltaic input source, i.e., the photovoltaic voltage, reaches the preset voltage, the discharge triggering module and the locking module control the discharge module to operate so as to perform discharging on the photovoltaic input source with a load connected. By determining whether the photovoltaic voltage of the photovoltaic input source after the discharging with the load connected reaches the preset voltage, it is determined whether the photovoltaic voltage is a weak voltage. If the photovoltaic voltage is a weak voltage, then the operation of the discharge module is maintained to avoid the waste of electric energy due to the repeated activation of the energy storage power supply by the weak voltage of the photovoltaic system; and if the photovoltaic voltage is not the weak voltage, i.e., if the photovoltaic voltage is enough to charge the energy storage power supply, then the discharge module is controlled to stop working, so that the photovoltaic input source can supply power to the energy storage power supply, thereby improving the utilization ratio of the photovoltaic input source.

### Brief Description of the Drawings

One or more embodiments are illustrated by corresponding attached drawings, and this does not constitute limitation on the embodiments. Elements with the same reference numerals in the attached drawings are indicated as similar elements, and the pictures in the attached drawings do not constitute scale limitation unless otherwise stated particularly.
FIG. 1 is an application scenario of an energy storage power supply according to an embodiment of the present application.
FIG. 2 is a structural block diagram of a photovoltaic weak current eliminating circuit according to an embodiment of the present application.
FIG. 3 is a structural block diagram of a photovoltaic weak current eliminating circuit according to another embodiment of the present application.
FIG. 4 is a circuit diagram of a photovoltaic weak current eliminating circuit according to an embodiment of the present application.
FIG. 5 is a circuit diagram of a photovoltaic weak current eliminating circuit according to another embodiment of the present application.
FIG. 6 is a circuit diagram of a photovoltaic weak current eliminating circuit according to yet another embodiment of the present application.

### Detailed Description of the Embodiments

In order to make objectives, technical solutions and advantages of the present application clearer, the present application will be further described in detail hereinafter with reference to attached drawings and embodiments. It shall be appreciated that, the specific embodiments described herein are only used to explain the present application, and are not used to limit the present application.

It shall be noted that, all features in the embodiments of the present application may be combined with each other without conflict, and all the combinations are within the scope claimed in the present application. In addition, although functional module division is made in the schematic diagrams of the device and logical sequences are shown in the flowchart diagrams, in some cases, the steps shown or described can be executed with module division and sequences different from those in the schematic diagrams of the device and the flowchart diagrams.

Unless otherwise defined, all technical and scientific terms used in this specification have the same meanings as commonly understood by those skilled in the art of the present application. The terms used in the specification of the present application are only for the purpose of describing specific embodiments, and are not intended to limit the present application. The term "and/or" used in this specification includes any and all combinations of one or more associated items listed.

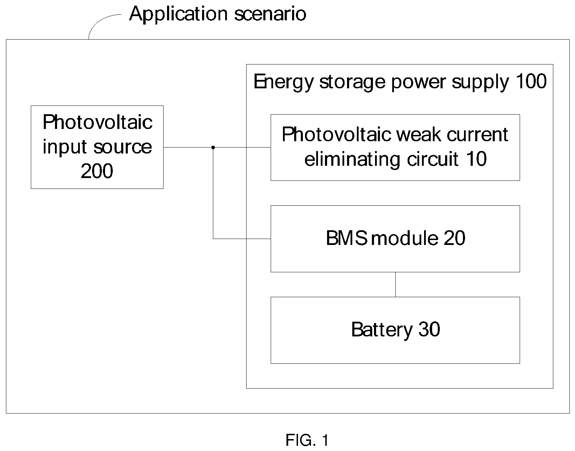

Referring to FIG. 1, FIG. 1 is an application scenario of an energy storage power supply according to an embodiment of the present application. As shown in FIG. 1, the application scenario includes an energy storage power supply 100 and a photovoltaic input source 200; and the energy storage power supply 100 is connected with the photovoltaic input source 200. Specifically, the photovoltaic input source 200 is used to receive sunlight, convert the sunlight into electric energy and input the electric energy to the energy storage power supply 100, so that the energy storage power supply 100 stores the electric energy. As shown in FIG. 1, the energy storage power supply 100 includes a photovoltaic weak current eliminating circuit 10, a BMS module 20 and a battery 30, both of the photovoltaic weak current eliminating circuit 10 and the BMS module 20 are connected to the photovoltaic input source 200, and the BMS module 20 is further connected to the battery 30. When the photovoltaic input source 200 receives sunlight, it converts the sunlight into electric energy and inputs the electric energy into the photovoltaic weak current eliminating circuit 10. After receiving the electric energy, the photovoltaic weak current eliminating circuit 10 will decide whether to discharge the electric energy based on the electric energy. When the electric energy is not discharged, it will be transmitted to the BMS module 20 to wake up the BMS system so as to control the photovoltaic input source 200 to supply power to the battery 30. When the wake-up signal is detected by the BMS module 20, the BMS module 20 will control the battery 30 to start to operate based on the wake-up signal, so that the battery 30 stores the electric energy. When the electric energy is to be discharged, the photovoltaic input source 200 discharges the electric energy through the photovoltaic weak current eliminating circuit 10, so as to prevent the photovoltaic input source 200 from repeatedly activating the BMS module 20 at weak voltage, thereby improving the stability of the energy storage power supply 100. It shall be noted that the BMS module 20 is internally provided with an activation or wake-up unit for waking up the BMS module 20 when the photovoltaic voltage of the photovoltaic input source 200 reaches a preset voltage. Therefore in this embodiment, when the photovoltaic input source 200 is just connected, even if the photovoltaic voltage is less than the preset voltage and the photovoltaic weak current eliminating circuit 10 does not operate, the electric energy transmitted by the photovoltaic input source 200 to the BMS module 20 cannot meet the condition of waking up the BMS module 20.

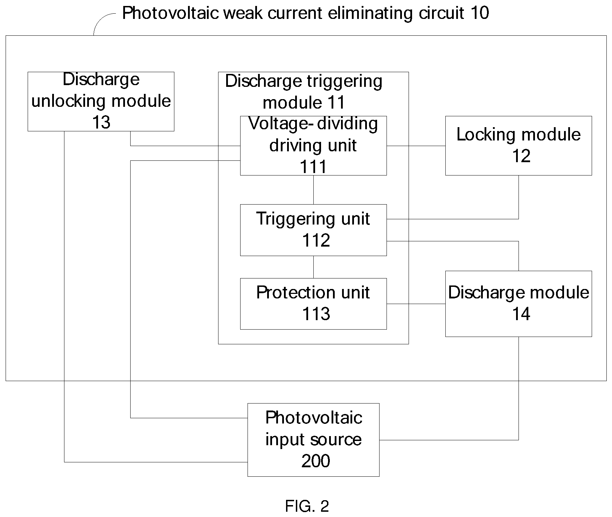

Referring to FIG. 2, FIG. 2 is a structural block diagram of a photovoltaic weak current eliminating circuit provided according to an embodiment of the present application. As shown in FIG. 2, the photovoltaic weak current eliminating circuit 10 includes a discharge triggering module 11, a locking module 12, a discharge unlocking module 13 and a discharge module 14. The discharge triggering module 11 is connected with the discharge module 14, the locking module 12 and the discharge unlocking module 13 respectively, and all of the discharge module 14, the discharge triggering module 11 and the discharge unlocking module 13 are used for connecting with the photovoltaic input source 200.

The photovoltaic input source 200 outputs the corresponding output voltage in real time according to the current sunlight, and after receiving the output voltage, the discharge triggering module 11 will determine whether the output voltage exceeds a preset voltage, and it will output a first control signal to the discharge module 14 so as to control the discharge module 14 to start to operate if the output voltage is greater than the preset voltage, thereby discharging the energy of the photovoltaic input source 200 through the discharge module 14. The preset voltage may refer to the activation voltage of the BMS module 20, or a voltage value based on the activation voltage and safety redundancy design.

As shown in FIG. 2, the discharge triggering module 11 includes a voltage-dividing driving unit 111 and a triggering unit 112, wherein the voltage-dividing driving unit 111 is connected with the photovoltaic input source 200, the discharge unlocking module 13, the locking module 12 and the triggering unit 112 respectively, and the triggering unit 112 is connected with the locking module 12 and the discharge module 14 respectively.

After the output voltage is output by the photovoltaic input source 200, the voltage-dividing driving unit 111 divides the output voltage and inputs the divided output voltage to the triggering unit 112. After receiving the divided output voltage, the triggering unit 112 will determine whether the divided output voltage reaches a trigger threshold to determine whether the output voltage is greater than the preset voltage. When the divided output voltage reaches the trigger threshold, the triggering unit 112 will output a first control signal to the discharge module 14 so as to control the discharge module 14 to start to operate. The trigger threshold refers to the working voltage of the triggering unit 112, and after the divided output voltage is greater than the working voltage of the triggering unit 112, the triggering unit 112 starts to operate and outputs the first control signal to the discharge module 14.

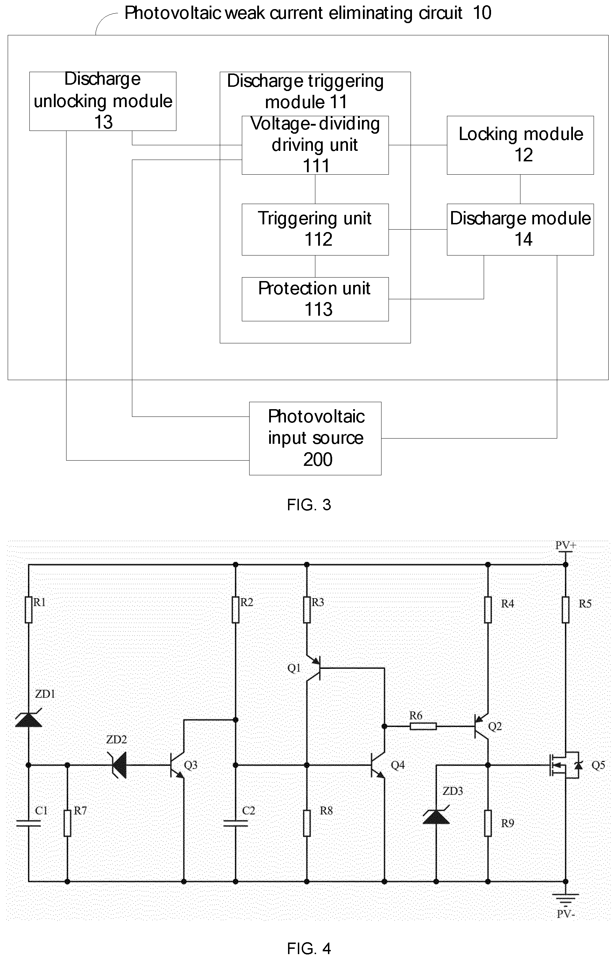

Specifically, referring to FIG. 4, FIG. 4 is a circuit diagram of a photovoltaic weak current eliminating circuit provided according to an embodiment of the present application. As shown in FIG. 4, the voltage-dividing unit 111 includes a resistor R2, a resistor R8 and a capacitor C2; and the triggering unit 112 includes a switch tube Q2, a switch tube Q4, a resistor R4, a resistor R6 and a resistor R9.

A first end of the resistor R2 is connected with the photovoltaic input source 200, and a second end of the resistor R2 is connected with the discharge unlocking module 13, a control end of the triggering unit 112 and a first end of the resistor R8, a second end of the resistor R8 is used for grounding, and the capacitor C2 is connected in parallel with the resistor R8. When the photovoltaic input source 200 outputs the output voltage, the resistor R2 and the resistor R8 divide the output voltage and input the divided output voltage to the triggering unit 112, so that the triggering unit 112 decides whether to output the first control signal according to the divided output voltage.

A control end of the switch tube Q4 is connected with the second end of the resistor R2, a first end of the switch tube Q4 is connected with a control end of the switch tube Q2 through the resistor R6, a second end of the switch tube Q4 is used for grounding, the control end of the switch tube Q2 is further connected with the locking module 12 through the resistor R6, a first end of the switch tube Q2 is connected with the photovoltaic input source 200 through the resistor R4, and a second end of the switch tube Q2 is grounded through the resistor R9. After receiving the divided output voltage, the switch tube Q4 will determine whether the divided output voltage is greater than a trigger threshold, and when the divided output voltage is greater than the trigger threshold, the switch tube Q4 will be turned on based on the divided output voltage. At this time, the control end of the switch tube Q2 is connected to the ground end through the resistor R6, and the switch tube Q2 will also be turned on accordingly. After the switch tube Q2 is turned on, it will output a first control signal to the discharge module 14 so that the discharge module 14 discharges the electric energy of the photovoltaic input source 200. It shall be noted that, in order to ensure the withstand voltage and dissipation power of the resistor R4, it is necessary to make reference to the highest voltage of the photovoltaic input source 200 when selecting the resistor R4.

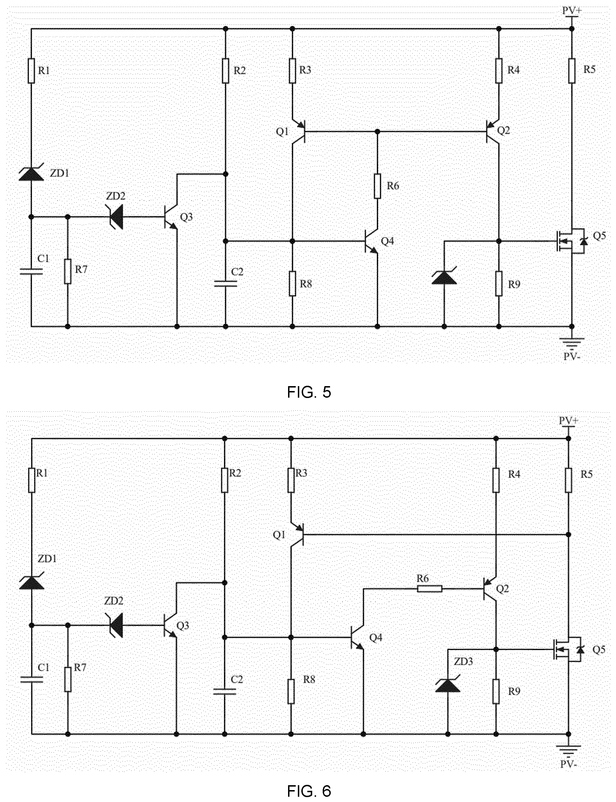

In some embodiments, the switch tube Q2 may also be directly connected with the locking module 12, as shown in FIG. 5, which is a circuit diagram of a photovoltaic weak current eliminating circuit provided according to another embodiment of the present application. The control end of the switch tube Q4 is connected with the resistor R2, the first end of the switch tube Q4 is connected with the locking module 12 and control end of the switch tube Q2 respectively through the resistor R6, and the control end of the switch tube Q2 is further connected with the locking module 12.

The locking module 12 is configured to keep the discharge triggering module 11 outputting the first control signal after the discharge module 14 operates, so as to maintain the operation of the discharge module 14. In an embodiment, after the discharge module 14 starts to operate according to the first control signal, the locking module 12 will adjust the proportion of the divided output voltage so that the divided output voltage is still greater than the trigger threshold, thereby keeping the discharge triggering module 11 outputting the first control signal to the discharge module 14. Specifically, the discharge module is driven to operate according to the first control signal that is outputted by the discharge triggering module, and after starting to operate by the discharge module may also be understood as after outputting the first control signal by the discharge triggering module. It shall be noted that the output voltage of the photovoltaic input source 200 is affected by illumination, and when the illumination is insufficient, that is, when the photovoltaic input source 200 is at a weak voltage, the no-load voltage thereof can reach the activation voltage of the BMS module 20, e.g., 12V. However, when a load is connected to the photovoltaic input source 200, the output voltage of the photovoltaic input source 200 will be pulled down. Therefore, after the discharge module 14 operates, i.e., after the photovoltaic input source 200 is connected with the load, it is necessary to keep the discharge triggering module 11 outputting the first control signal through the locking module 12 so as to keep the discharge module 14 on. Moreover, after the discharge module 14 is turned on, it is determined again whether the output voltage of the photovoltaic input source 200 is greater than the preset voltage, and then it is determined whether the photovoltaic input source 200 is at a weak voltage.

As shown in FIG. 4, the locking module 12 includes a switch tube Q1 and a resistor R3, a control end of the switch tube Q1 is connected with the triggering unit 112, a first end of the switch tube Q1 is connected with a first end of the voltage-dividing driving unit 111 through the resistor R3, and a second end of the switch tube Q1 is connected with a second end of the voltage-dividing driving unit 111. When the switch tube Q4 is turned on, the switch tube Q1 and the switch tube Q2 are also turned on accordingly. After the switch tube Q1 is turned on, the resistor R2 and the resistor R3 are connected in parallel and share the voltage with the resistor R8, so that the input voltage of the switch tube Q4 is increased. That is, it can be ensured that the input voltage of the switch tube Q4 is always greater than the trigger threshold after the switch tube Q2 outputs the first control signal so as to control the discharge module 14 to operate, thus keeping the switch tube Q4 on and thereby keeping the discharge module 14 discharging the electric energy of the photovoltaic input source 200. The resistance of the resistor R3 is smaller than that of the resistor R2. It shall be noted that after the discharge module 14 is turned on, the output voltage of the photovoltaic input source 200 becomes low because the photovoltaic input source 200 is connected with the discharge module 14. At this time, by providing the switch tube Q1 and the resistor R3, when the discharge module 14 is turned on, the resistor R2 and the resistor R3 are connected in parallel to reduce the partial voltage on the resistor R2, so that the voltage on the resistor R8 can support the switch tube Q4 to be in the on-state continuously. Based on the above operation, the discharge triggering module 11 can be prevented from repeatedly switching the working state at the weak voltage, thereby improving the reliability of the photovoltaic weak current eliminating circuit 10.

In another embodiment, as shown in FIG. 5, the control end of the switch tube Q1 is connected with the first end of the resistor R6, the first end of the switch tube Q1 is connected with the photovoltaic input source 200 through the resistor R3, and the second end of the switch tube Q1 is connected with the second end of the resistor R2. After the switch tube Q4 is turned on, the switch tube Q1 is connected to the ground end through the resistor R6, and the switch tube Q1 is turned on. At this point, the resistor R3 is connected in parallel with the resistor R2 so as to reduce the partial voltage on the resistor R2, thus keeping the switch tube Q4 on and thereby keeping the discharge module 12 discharging the electric energy of the photovoltaic input source 200.

In another embodiment, the locking module 12 may also be connected with the discharge module 14, as shown in FIG. 3, which is a structural block diagram of a photovoltaic weak current eliminating circuit provided by another embodiment of the present application, the locking module 12 is connected with the discharge module 14 and the discharge triggering module 11 respectively, the discharge triggering module 11 is connected with the discharge module 14 and the discharge unlocking module 13 respectively, and all of the discharge module 14, the discharge triggering module 11 and the discharge unlocking module 13 are used for connecting with the photovoltaic input source 200. The discharge triggering module 11 includes a voltage-dividing driving unit 111 and a triggering unit 112, wherein the voltage-dividing driving unit 111 is connected with the photovoltaic input source 200, the discharge unlocking module 13, the locking module 12 and the triggering unit 112 respectively, and the triggering unit 112 is connected with the discharge module 14.

Specifically, as shown in FIG. 6, which is a circuit diagram of a photovoltaic weak current eliminating circuit provided according to yet another embodiment of the present application, the voltage-dividing driving unit 111 includes a resistor R2, a resistor R8 and a capacitor C2, and the triggering unit 112 includes a switch tube Q2, a switch tube Q4, a resistor R4, a resistor R6 and a resistor R9. The connection relationships of the voltage-dividing driving unit 111 are the same as those in FIG. 4.

A control end of the switch tube Q4 is connected with a second end of the resistor R2, a first end of the switch tube Q4 is connected with a control end of the switch tube Q2 through the resistor R6, a second end of the switch tube Q4 is used for grounding, a first end of the switch tube Q2 is connected with the photovoltaic input source 200 through the resistor R4, and a second end of the switch tube Q2 is grounded through the resistor R9. When the switch tube Q4 is turned on according to the divided output voltage, the switch tube Q2 is also turned on accordingly, and after the switch tube Q2 is turned on, the output voltage of the photovoltaic input source 200 is input to the discharge module 14 through the switch tube Q2 to control the discharge module 14 to be turned on.

As shown in FIG. 4 to FIG. 6, the discharge module 14 includes a resistor R5 and a switch tube Q5, a control end of the switch tube Q5 is connected with the discharge triggering module 11, a first end of the switch tube Q5 is connected with the photovoltaic input source 200 through the resistor R5, and a second end of the switch tube Q5 is used for grounding. After the switch tube Q2 is turned on, the output voltage of the photovoltaic input source 200 flows into the control end of the switch tube Q5 through the switch tube Q2 to control the switch tube Q5 to be turned on. At this point, the output voltage of the photovoltaic input source 200 flows into the ground end through the resistor R5 to discharge the electric energy in the photovoltaic input source 200. It shall be noted that, in order to prevent the switch tube Q5 from being turned on mistakenly, the resistor R9 is selected based on the on-voltage of the switch tube Q5.

In some embodiments, as shown in FIG. 2 to FIG. 3, the discharge triggering module 11 further includes a protection unit 113, a first end of the protection unit 113 is connected with the triggering unit 112 and the control end of the discharge module 14 respectively, and a second end of the protection unit 113 is used for grounding. The protection unit 113 is configured to limit the voltage at the control end of the discharge module 14 when the discharge module 14 is turned on.

As shown in FIG. 4 to FIG. 6, the protection unit 113 is a diode ZD3, a cathode of the diode ZD3 is connected to the control end of the switch tube Q5, and an anode of the diode ZD3 is connected to the ground end. The diode ZD3 is a clamper tube of the switch tube Q5, and the control end voltage of the switch tube Q5 is ensured to be within the rated range through the diode ZD3.

As shown in FIG. 6, the locking module 12 includes a switch tube Q1 and a resistor R3, a control end of the switch tube Q1 is connected with the second end of the resistor R5, a first end of the switch tube Q1 is connected with the photovoltaic input source 200 through the resistor R3, and a second end of the switch tube Q1 is connected with the second end of the resistor R2. When the switch tube Q5 is turned on, the output voltage is further input to the control end of the switch tube Q1 through the resistor R5 so that the switch tube Q1 is turned on. When the switch tube Q1 is turned on, the resistor R2 and the resistor R3 are connected in parallel and share the voltage with the resistor R8 to keep the switch tube Q4 on, thereby keeping the discharge module 14 discharging the electric energy of the photovoltaic input source 200.

In the process that the discharge module 14 continuously discharges the electric energy of the photovoltaic input source 200, the discharge unlocking module 13 also receives the output voltage of the photovoltaic input source 200 in real time, and determines whether the output voltage of the photovoltaic input source 200 is still greater than the preset voltage when the photovoltaic input source 200 is connected with the load. If the output voltage is greater than the preset voltage, then the time during which the output voltage is greater than the preset voltage is acquired, and it is determined whether the time exceeds a preset time. When the time during which the output voltage is greater than the preset voltage exceeds the preset time, the discharge unlocking module 13 will control the discharge triggering module 11 to output a second control signal to stop the discharge module 14 from working. In this way, whether the photovoltaic voltage is a weak voltage is determined by determining whether the photovoltaic voltage of the photovoltaic input source 200 after the discharging with a load connected reaches the preset voltage. If the photovoltaic voltage is a weak voltage, then the operation of the discharge module 14 is maintained to avoid the waste of electric energy due to the repeated activation of the energy storage power supply 100 by the weak voltage of the photovoltaic system; and if the photovoltaic voltage is not the weak voltage, i.e., if the photovoltaic voltage is enough to charge the energy storage power supply 100, then the discharge module 14 is controlled to stop working, so that the photovoltaic input source 200 can supply power to the energy storage power supply 100.

As shown in FIG. 4 to FIG. 6, the discharge unlocking module 13 includes a diode ZD1, a diode ZD2, a capacitor C1, a switch tube Q3, a resistor R1 and a resistor R7; a cathode of the diode ZD1 is connected with the photovoltaic input source 200 through the resistor R1, an anode of the diode ZD1 is respectively connected with a first end of the capacitor C1 and a cathode of the diode ZD2, an anode of the diode ZD2 is connected with a control end of the switch tube Q3, a first end of the switch tube Q3 is connected with a control end of the discharge triggering module 11, a second end of the switch tube Q3 is used for grounding, a second end of the capacitor C1 is grounded, and the resistor R7 is connected in parallel with the capacitor C1. During the operation of the discharge module 14, the output voltage of the photovoltaic input source 200 will also be outputted to the discharge unlocking module 13 and inputted to the control end of the switch tube Q3 after breaking down the diode ZD1 and the diode ZD2 respectively, so that the switch tube Q3 is turned on. After the switch tube Q3 is turned on, the control end of the switch tube Q4 is grounded through the switch tube Q3, so that it is in the off state. At this point, the discharge triggering module 11 stops working, so that the discharge module 14 also stops working. It shall be noted that, the capacity of the capacitor C1 is much larger than that of the capacitor C2, and based on this description, when the photovoltaic input source 200 outputs a voltage, the switch tube Q4 should be turned on earlier than the switch tube Q3, so that the discharge triggering module 11 operates preferentially and then the resistor R5 is connected to the photovoltaic input source 200 first. In this way, at any moment, the output voltage of the photovoltaic input source 200 will pass through the photovoltaic weak current eliminating circuit 10 first to eliminate the weak current until the output power of the photovoltaic input source 200 meets the preset power for starting the BMS module 20.

The present application provides a photovoltaic weak current eliminating circuit and an energy storage power supply, the photovoltaic weak current eliminating circuit includes a discharge triggering module, a locking module, a discharge unlocking module and a discharge module. The discharge triggering module is connected with the discharge module, the locking module and the discharge unlocking module respectively, and all of the discharge module, the discharge triggering module and the discharge unlocking module are used for connecting with a photovoltaic input source. The discharge triggering module is configured to output a first control signal to the discharge module when an output voltage of the photovoltaic input source is greater than a preset voltage, so as to control the discharge module to operate and discharge the energy of the photovoltaic input source. After the discharge module operates, the locking module keeps the discharge triggering module outputting the first control signal, so as to maintain the operation of the discharge circuit. The discharge unlocking module controls the discharge triggering module to output a second control signal if the output voltage of the photovoltaic input source is still greater than the preset voltage after the discharge module operates, so as to stop the operation of the discharge module. Based on the above description, when the photovoltaic input source is connected, and the output voltage of the photovoltaic input source, i.e., the photovoltaic voltage, reaches the preset voltage, the discharge triggering module and the locking module control the discharge module to operate so as to perform discharging on the photovoltaic input source with a load connected. By determining whether the photovoltaic voltage of the photovoltaic input source after the discharging with the load connected reaches the preset voltage, it is determined whether the photovoltaic voltage is a weak voltage. If the photovoltaic voltage is a weak voltage, then the operation of the discharge module is maintained to avoid the waste of electric energy due to the repeated activation of the energy storage power supply by the weak voltage of the photovoltaic system; and if the photovoltaic voltage is not the weak voltage, i.e., if the photovoltaic voltage is enough to charge the energy storage power supply, then the discharge module is controlled to stop working, so that the photovoltaic input source can supply power to the energy storage power supply, thereby improving the utilization ratio of the photovoltaic input source.

It shall be noted that, the embodiments of the devices described above are only for illustrative purpose, wherein the units illustrated as separate components may be or may not be physically separated, and components displayed as units may be or may not be physical units. That is, these units and components may be located in one place or distributed over multiple network units. Some or all of the modules may be selected according to actual needs to achieve the purpose of the solution of the embodiment.

Finally, it shall be noted that, the above embodiments are only used to illustrate the technical solutions of the present application, and are not intended to limit the present application. Under the idea of the present application, technical features in the above embodiments or different embodiments may also be combined, the steps may be implemented in any order, and many other variations in different aspects of the present application as described above are possible, and these variations are not provided in details for conciseness. Although the present application has been described in detail with reference to the foregoing embodiments, those of ordinary skill in the art shall appreciate that, the technical solutions described in the foregoing embodiments may still be modified or some of the technical features may be equivalently replaced, and these modifications or replacements do not make the essence of the corresponding technical solutions deviate from the scope of the technical solutions of various embodiments of the present application.

## Claims

1. A photovoltaic weak current eliminating circuit, being **characterized in that**, the photovoltaic weak current eliminating circuit comprises a discharge triggering module, a locking module, wherein a discharge unlocking module and a discharge module;
the discharge triggering module is connected with the discharge module, the locking module and the discharge unlocking module respectively, and all of the discharge module, the discharge triggering module and the discharge unlocking module is used for connecting with a photovoltaic input source;
when an output voltage of the photovoltaic input source is greater than a preset voltage, the discharge triggering module is configured to output a first control signal to the discharge module so as to control the discharge module to operate and discharge the energy of the photovoltaic input source;
after the discharge module operates, the locking module is configured to keep the discharge triggering module outputting the first control signal so as to maintain the operation of the discharge circuit;
after the discharge module operates, the discharge unlocking module is configured to determine whether the output voltage of the photovoltaic input source is greater than the preset voltage, andwhen the output voltage of the photovoltaic input source is greater than the preset voltage, iscontrolling the discharge triggering module to output a second control signal, so as to stop the operation of the discharge module.

2. The photovoltaic weak current eliminating circuit according to Claim 1, being **characterized in that**, the discharge triggering module comprises a voltage-dividing driving unit and a triggering unit;
the voltage-dividing driving unit is respectively connected with the photovoltaic input source, the discharge unlocking module, the locking module and the triggering unit, and the triggering unit is respectively connected with the locking module and the discharge module;
the voltage-dividing driving unit is configured to divide the output voltage and input the divided output voltage to the triggering unit;
the triggering unit is configured to determine whether the divided output voltage reaches a trigger threshold so as to determine whether the output voltage is greater than the preset voltage, and output the first control signal to the discharge module when the divided output voltage reaches the trigger threshold.

3. The photovoltaic weak current eliminating circuit according to Claim 2, being **characterized in that**, the voltage unit comprises a resistor R2, a resistor R8 and a capacitor C2;
a first end of the resistor R2 is connected with the photovoltaic input source, a second end of the resistor R2 is respectively connected with the discharge unlocking module, a control end of the triggering unit and a first end of the resistor R8, a second end of the resistor R8 is used for grounding, and the capacitor C2 is connected in parallel with the resistor R8.

4. The photovoltaic weak current eliminating circuit according to Claim 3, being **characterized in that**, the triggering unit comprises a switch tube Q2, a switch tube Q4, a resistor R4, a resistor R6 and a resistor R9;
a control end of the switch tube Q4 is connected with the second end of the resistor R2, a first end of the switch tube Q4 is connected with a control end of the switch tube Q2 through the resistor R6, a second end of the switch tube Q4 is used for grounding, the control end of the switch tube Q2 is further connected with the locking module through the resistor R6, a first end of the switch tube Q2 is connected with the photovoltaic input source through the resistor R4, and a second end of the switch tube Q2 is grounded through the resistor R9.

5. The photovoltaic weak current eliminating circuit according to Claim 1, being **characterized in that**, the discharge module comprises a resistor R5 and a switch tube Q5;
a control end of the switch tube Q5 is connected with the discharge triggering module, a first end of the switch tube Q5 is connected with the photovoltaic input source through the resistor R5, and a second end of the switch tube Q5 is used for grounding.

6. The photovoltaic weak current eliminating circuit according to Claim 2, being **characterized in that**, after the discharge module operates, the locking module is configured to adjust the proportion of the divided output voltage, so as to keep the discharge triggering module outputting the first control signal.

7. The photovoltaic weak current eliminating circuit according to Claim 6, being **characterized in that**, the locking module comprises a switch tube Q1 and a resistor R3;
a control end of the switch tube Q1 is connected with the triggering unit, a first end of the switch tube Q1 is connected with a first end of the voltage-dividing driving unit through the resistor R3, and a second end of the switch tube Q1 is connected with a second end of the voltage-dividing driving unit.

8. The photovoltaic weak current eliminating circuit according to Claim 1, being **characterized in that**, after the discharge module operates, the discharge unlocking module is configured to determine whether the output voltage is greater than the preset voltage and whether the time during which the output voltage is greater than the preset voltage exceeds a preset time, andwhen the time during which the output voltage is greater than the preset voltage exceeds the preset time, the discharge unlocking moduleis configured to control the discharge triggering module to output the second control signal.

9. The photovoltaic weak current eliminating circuit according to Claim 8, being **characterized in that**, the discharge unlocking module comprises a diode ZD1, a diode ZD2, a capacitor C1, a switch tube Q3, a resistor R1 and a resistor R7;
a cathode of the diode ZD1 is connected with the photovoltaic input source through the resistor R1, an anode of the diode ZD1 is respectively connected with a first end of the capacitor C1 and a cathode of the diode ZD2, an anode of the diode ZD2 is connected with a control end of the switch tube Q3, a first end of the switch tube Q3 is connected with a control end of the discharge triggering module, a second end of the switch tube Q3 is used for grounding, a second end of the capacitor C1 is grounded, and the resistor R7 is connected in parallel with the capacitor C1.

10. An energy storage power supply, being **characterized in that**, comprising:
a BMS module;
a battery, and
the photovoltaic weak current eliminating circuit according to any of Claims 1 to 9,
wherein the BMS module is connected with the discharge module and the battery respectively.
